# EUROPEAN PATENT SPECIFICATION

(11) **EP 2 271 212 B1**
(45) Date of publication and mention of the grant of the patent: **30.08.2017**
(21) Application number: 09716974.2
(22) Date of filing: 09.03.2009
(51) Int. Cl.: A01N 25/04, A01N 25/10, A01N 25/30, A01N 43/40, A01N 43/653, A01N 57/16

(54) **STABILIZED OIL-IN-WATER EMULSIONS INCLUDING AGRICULTURALLY ACTIVE INGREDIENTS**
STABILISIERTE ÖL-IN-WASSER-EMULSIONEN, DIE LANDWIRTSCHAFTLICHE WIRKSTOFFE BEINHALTEN
ÉMULSIONS HUILE-DANS-L EAU STABILISÉES COMPRENANT DES INGRÉDIENTS ACTIFS SUR LE PLAN AGRICOLE

(30) Priority: 07.03.2008 US 68530
(43) Date of publication of application: 12.01.2011
(73) Proprietor: Dow AgroSciences LLC, Indianapolis, IN 46268-1054 (US)
(72) Inventor: XU, Wen, Cary, NC 27519 (US); TANK, Holger, Zionsville IN 46077 (US); COBB, Joey, Noblesville IN 46062 (US); SAMPSON, Gary, Martinsville IN 46151 (US)
(74) Representative: Weickmann & Weickmann PartmbB
(86) International application number: PCT/US2009/036507
(87) International publication number: WO 2009/111779

(56) References cited:
- JP-A- 2007 308 440
- US-A1- 2007 027 034

## Description

### FIELD OF THE INVENTION

The present invention relates to stable, agricultural oil-in-water emulsion compositions.

### CROSS-REFERENCE TO RELATED APPLICATIONS

This Application claims the benefit of U.S. Provisional Application 61/068,530 filed on March 7, 2008.

### BACKGROUND AND SUMMARY

Concentrated oil-in water emulsions of liquid active ingredients or active ingredients dissolved in a solvent are commonly used in agricultural compositions due to certain advantages provided over other formulation types. Emulsions are water based, contain little or no solvent, allow mixtures of active ingredients to be combined into a single formulation and are compatible with a wide range of packaging material. However, there are also several disadvantages of such agricultural emulsions, namely that they are often complex formulations which require high amounts of surface-active agents for stabilization, are generally very viscous, have a tendency for Oswald ripening of the emulsion globules and separate over time. Therefore, improvements in such emulsion formulations are needed in the agricultural field.

Several oil-in-water emulsion compositions for cosmetics and dermatological applications have been described in patents U.S. 5,658,575; U.S. 5,925,364; U.S. 5,753,241; U.S. 5,925,341; U.S. 6,066,328; U.S. 6,120,778; U.S. 6,126,948; U.S. 6,689,371; U.S. 6,419,946; U.S. 6,541,018; U.S. 6,335,022; U.S. 6,274,150; U.S. 6,375,960; U.S. 6,464,990; U.S. 6,413,527; U.S. 6,461,625; and 6,902,737. However, although these types of emulsions have found advantageous use in personal care products, these types of emulsions have not been used previously with agriculturally active compounds, which are typically present in emulsions at much higher levels than cosmetic active ingredients.

One example of an agricultural oil-in-water emulsion composition that is suitable for agriculturally active ingredients that are liquid or soluble in suitable solvents at relevant storage temperatures is disclosed in U.S. Patent Application Serial No. 11/495 228. The present invention is related to agricultural compositions comprising an oil-in-water emulsion, the oil-in-water emulsion composition having an oil phase and water phase, the oil-in-water emulsion composition comprising an oil adapted to form oily globules having a mean particle diameter of less than 800 nanometers, a vegetable based oil that has very low water solubility, and is compatible with the oil phase, at least one agriculturally active compound, at least one non-ionic lipophilic surface-active agent, at least one non-ionic hydrophilic surface-active agent, at least one ionic surface-active agent, and water.

### DETAILED DESCRIPTION

One embodiment of the present invention is a novel oil-in-water emulsion composition having an oil phase and water phase, the oil-in-water emulsion composition comprising:
an oil adapted to form oily globules having a mean particle diameter of less than 800 nanometers;
a vegetable based oil having low water solubility and being compatible with the oil phase;
at least one agriculturally active compound;
at least one non-ionic lipophilic surface-active agent,
at least one non-ionic hydrophilic surface-active agent;
at least one ionic surface-active agent; and
water.

The oil phase of the oil-in-water emulsion of the present invention utilizes either an agriculturally active compound which is in the form of an oil, or alternatively, an agriculturally active compound dissolved or mixed in an oil, to form the oily globules. An oil is by definition, a liquid which is not miscible with water. An oil which is compatible with the agriculturally active compound may be used in the oil-in-water emulsions of the present invention. The term 'compatible' means that the oil will dissolve or mix uniformly with the agriculturally active compound and allow for the formation of the oily globules of the oil-in-water emulsion of the present invention. The oil is selected from the group consisting of short-chain fatty acid triglycerides, silicone oils, petroleum fractions or hydrocarbons such as heavy aromatic naphtha solvents, light aromatic naphtha solvents, hydrotreated light petroleum distillates, paraffinic solvents, mineral oil, alkylbenzenes, paraffinic oils. Vegetable oils are selected from soy oil, rape seed oil, coconut oil, cotton seed oil, palm oil, soybean oil, and the like; alkylated vegetable oils and alkyl esters of fatty acids such as methyloleate and the like.

An agriculturally active compound is herein defined as any oil soluble compound, hydrophobic compound, of solid compound having a melting point of below about 95 degrees Celsius or less that shows some pesticidal or biocidal activity. It is understood to refer to the active compound per se when it is itself an oil or alternatively, the active compound dissolved in an oil of suitable polymeric modifier. Such compounds or pesticides include fungicides, insecticides, nematocides, miticides, termiticides, rodenticides, arthropodicides, herbicides, biocides and the like. Examples of such agriculturally active ingredients can be found in The Pesticide Manual, 12^{th} Edition. Exemplary pesticides which can be utilized in the oil-in-water emulsion of the present invention include, but are not limited to, benzofuranyl methylcarbamate insecticides such as benfuracarb, and carbosulfan; oxime carbamate insecticides such as aldicarb; fumigant insecticides such as chloropicrin, 1,3-dichloropropene and methyl bromide; juvenile hormone mimics such as fenoxycarb; organophosphate insecticides such as dichlorvos; aliphatic organothiophosphate insecticides such as malathion and terbufos; aliphatic amide organothiophosphate insecticides such as dimethoate; benzotriazine organothiophosphate insecticides such as azinphos-ethyl and azinphos-methyl; pyridine organothiophosphate insecticides such as chlorpyrifos and chlorpyrifos-methyl; pyrimidine organothiophosphate insecticides such as diazinon; phenyl organothiophosphate insecticides such as parathion and parathion-methyl; pyrethroid ester insecticides such as bifenthrin, cyfluthrin, beta-cyfluthrin, cyhalothrin, gamma-cyhalothrin, lambda-cyhalothrin, cypermethrin, alpha-cypermethrin, beta-cypermethrin, fenvalerate, and permethrin; and the like.

Exemplary herbicides which can be used in the oil-in-water emulsion of the present invention include, but are not limited to: amide herbicides such as dimethenamid and dimethenamid-P; anilide herbicides such as propanil; chloroacetanilide herbicides such as acetochlor, alachlor, butachlor, metolachlor and S-metolachlor; cyclohexene oxime herbicides such as sethoxydim; dinitroaniline herbicides such as benfluralin, ethalfluralin, pendimethalin, and trifluralin; nitrile herbicides such asbromoxynil octanoate; phenoxyacetic herbicides such as 4-CPA, 2,4-D, 3,4-DA, MCPA, and MCPA-thioethyl; phenoxybutyric herbicides such as 4-CPB, 2,4-DB, 3,4-DB, and MCPB; phenoxypropionic herbicides such as cloprop, 4-CPP, dichlorprop, dichlorprop-P, 3,4-DP, fenoprop, mecoprop and mecoprop-P; aryloxyphenoxypropionic herbicides such as cyhalofop, fluazifop, fluazifop-P, haloxyfop, haloxyfop-R; pyridine herbicides such as aminopyralid, clopyralid, fluroxypyr, picloram, and triclopyr; triazole herbicides such as carfentrazone ethyl; and the like.

The herbicides can also generally be employed in combination with known herbicide safeners such as: benoxacor, cloquintocet, cyometrinil, daimuron, dichlormid, dicyclonon, dietholate, fenchlorazole, fenchlorazole-ethyl, fenclorim, flurazole, fluxofenim, furilazole, isoxadifen, isoxadifen-ethyl, mefenpyr, mefenpyr-diethyl, MG191, MON4660, R29148, mephenate, naphthalic anhydride, N-phenylsulfonylbenzoic acid amides and oxabetrinil.

Exemplary fungicides which can be used in the oil-in-water emulsion of the present invention include, but are not limited to, difenoconazole, dimethomorph, dinocap, diphenylamine, dodemorph, edifenphos, fenarimol, fenbuconazole, fenpropimorph, myclobutanil, oleic acid (fatty acids), propiconazole, tebuconazole and the like.

It is understood by those skilled in the art that any combination of agriculturally active compounds may also be used in the oil-in-water emulsion of the present invention as long as a stable and effective emulsion is still obtained.

The amount of agriculturally active ingredient within the oil-in-water emulsion will vary depending upon the actual active ingredient, the application of the agriculturally active ingredient and the appropriate application levels which are well known to those skilled in the art. The total amount of agriculturally active ingredient within the oil-in-water emulsion will be from about 10, more preferably from about 15 and most preferably from about 20 to about 35 and most preferably to about 30 weight percent based on the total weight of the oil-in-water emulsion.

The vegetable based oil may be included in the oil phase to prevent the oil droplets or globules from coalescing and growth. Examples of suitable vegetable based oils include soybean oil, rape seed oil, soy oil, coconut oil, cotton seed oil, palm oil, peanut oil, linseed oil, canola oil, olive oil, sunflower oil and corn oil.

The amount of vegetable based oil used in the oil-in-water emulsion of the present disclosure typically ranges from about 0.1% to about 20%, preferably from about 1% to about 10%, and more preferably about 2% about 6%.

In one embodiment of the present disclosure, a polymeric modifier may be included in the oil phase to retard crystallization of the agriculturally active ingredient. The polymeric modifier permits the use of agriculturally active ingredients that have melting points below about 95 degrees Celsius.

Examples of such agriculturally active ingredients that may be used in the oil-in-water emulsion composition of the present disclosure include Fluroxpyr Meptyl, Chloropyrifos, Chlorpyrifos methyl, Trifluralin, Cyhalofop butyl, Ethalfluralin, Benfluralin, Myclobutanil, Acequinocyl, Alpha-cypermethrin, Amitraz, Bensultap, Beta-cyfluthrin, Beta-cypermethrin, Bifenox, Bifenthrin, Bioresmethrin, Bromoxynil Octanoate, Butralin, Cyflufenamid, Cyfluthrin, Cypermethrin, Diclofop-methyl, Dicofol, Esfenvalerate, Ethalfluralin, Etofenprox, Fenazaquin, Fenoxaprop-P-ethyl, Fenpropathrin, Fenvalerate, Flumiclorac-pentyl, Fluoroglycofen-ethyl, Flurazole, Haloxyfop-etotyl, Indoxacarb, Lambda-cyhalothrin, Metamifop, Methoxychlor, Oxyfluorfen, Pendimethalin, Permethrin, Propaquizafop, Pyributicarb, Quizalofop-P-ethyl, Trifloxystrobin, Bromophos, Fenoxaprop-ethyl, Fluazolate, Nitrofen, and Profluralin.

Suitable polymeric modifiers for addition to the oil phase have very low water solubility and good solubility in a mixture of the active ingredient in a molten state with or without additional solvent present. Examples of suitable polymeric modifiers may include ethyl cellulose, for example, Ethocel 10 Std FP, Ethocel Std 4, Ethocel Std 7, Ethocel 45, Ethocel 100 FP, and Ethocel 300; Polyacrylate, Latex, Polycarbonate, Polyvinyl Acetate homopolymers and copolymers, Polyolefin, Polyurethane, Polyisobutylene, Polybutene, Vinyl polymers, Polyester, Polyether, and Polyacrylonitrile.

The components of the oil-in-water emulsion are combined using a process described below to produce oily globules having a lamellar liquid crystal coating. The lamellar liquid crystal coating is an extremely fine mono-or oligolamellar layer. Oligolamellar layer is understood to refer to a layer comprising from 2 to 5 lipid lamellae. This lamellar liquid crystal coating can be detected by Transmission Electronic Microscopy after cryofracture or negative stain, X-Ray diffraction or Optical Microscopy under polarized light. Terms and structure of lamellar crystal liquid phase are well defined in "The Colloidal Domain" second edition, by D. Fennell Evans and H. Wennerstrom, Wiley-VCH (1999), pages 295-296 and 306-307. The oligolamellar layer is comprised of the non-ionic lipophilic, non-ionic hydrophilic, and ionic surface-active agents, as stated previously. Preferably, the lipophilic surface-active agent and the hydrophilic surface-active agent each contain at least one optionally saturated and/or branched fatty hydrocarbon chain having more than 12 carbon atoms, preferably from 16 to 22 carbon atoms.

Preferably, the lipophilic surface-active agent has an HLB between about 2 and about 5. HLB is a standard term known to those skilled in the art and refers to Hydrophilic Lipophilic Balance which identifies the emulsifier's solubility in water or oil.

Lipophilic describes the ability of a material to dissolve in a fat-like solvent or lipid. The lipophilic surface-active agent is typically selected from optionally ethoxylated mono-or polyalkyl ethers or esters of glycerol or polyglycerol, mono- or polyalkyl ethers or esters of sorbitan (optionally ethoxylated), mono- or polyalkyl ethers or esters of pentaerythritol, mono- or polyalkyl ethers or esters of polyoxyethylene, and mono- or polyalkyl ethers or esters of sugars. Examples of lipophilic surface-active agents include, but are not limited to sucrose distearate, diglyceryl distearate, tetraglyceryl tristearate, decaglyceryl decastearate, diglyceryl monostearate, hexaglyceryltristearate, decaglyceryl pentastearate, sorbitan monostearate, sorbitan tristearate, diethylene glycol monostearate, the ester of glycerol and palmitic and stearic acids, polyoxyethylenated monostearate 2 EO (containing 2 ethylene oxide units), glyceryl mono- and dibehenate and pentaerythritol tetrastearate.

Hydrophilic describes the affinity of a material to associate with water. The hydrophilic surface-active agent typically has a HLB of from about 8 to about 12 and are typically selected from mono- or polyalkyl ethers or esters of polyethoxylated sorbitan, mono- or polyalkyl ethers or esters of polyoxyethylene, mono- or polyalkyl ethers or esters of polyglycerol, block copolymers of polyoxyethylene with polyoxypropylene or polyoxybutylene, and mono- or polyalkyl ethers or esters of optionally ethoxylated sugars. Examples of hydrophilic surface-active agents include, but are not limited to polyoxyethylenated sorbitan monostearate 4 EO, polyoxyethylenated sorbitan tristearate 20 EO, polyoxyethylenated sorbitan tristearate 20 EO, polyoxyethylenated monostearate 8 EO, hexaglyceryl monostearate, polyoxyethylenated monostearate 10 EO, polyoxyethylenated distearate 12 EO and polyoxyethylenated methylglucose distearate 20 EO.

In addition to the lipophilic and hydrophilic surface-active agents, an ionic surface-active agent also comprises the oligolamellar layer of the lamellar liquid crystal coating.

Ionic surface-active agents which can be used in the oil-in-water emulsion of the present invention include (a) neutralized anionic surface-active agents, (b) amphoteric surface-active agents, (c) alkylsulphonic derivatives and (d) cationic surface-active agents.

Neutralized anionic surface-active agents (a) include, but are not limited to, for example:
- alkali metal salts of dicetyl phosphate and dimyristyl phosphate, in particular sodium and potassium salts;
- alkali metal salts of cholesteryl sulphate and cholesteryl phosphate, especially the sodium salts;
- lipoamino acids and their salts, such as mono- and disodium acylglutamates, such as the disodium salt of N-stearoyl-L-glutamic acid, the sodium salts of phosphatidic acid;
- phospholipids; and
- the mono- and disodium salts of acylglutamic acids, in particular N-stearoylglutamic acid.

Anionic surface-active agents chosen from alkyl ether citrates and mixtures thereof which can be used in the oil-in-water emulsions of the present invention are disclosed in U.S. 6,413 527. Alkyl ether citrates include monoesters or diesters formed by citric acid and at least one oxyethylenated fatty alcohol comprising a saturated or unsaturated, linear or branched alkyl chain having from 8 to 22 carbon atoms and comprising from 3 to 9 oxyethylene groups, and mixtures thereof. These citrates can be chosen, for example from the mono- and diesters of citric acid and of ethoxylated lauryl alcohol comprising from 3 to 9 oxyethylene groups. The alkyl ether citrates are preferably employed in the neutralized form at a pH of about 7. Neutralization agents can being chosen from inorganic bases, such as sodium hydroxide, potassium hydroxide or ammonia, and organic bases, such as mono,- di- and triethanolamine, aminomethyl-1,3-propanediol, N-methylglucamine, basic amino acids, such as arginine and lysine and mixtures thereof.

Amphoteric surface-active agents (b) include, but are not limited to phospholipids and especially phosphatidylethanolamine from pure soya.

Alkylsulphonic derivatives (c) include, but are not limited to compounds of the formula: 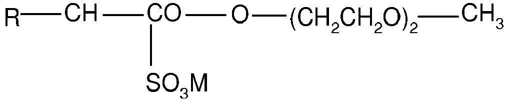 in which R represents the radicals C₁₆H₃₃ and C₁₈H₃₇, taken as a mixture or separately, and M is an alkali metal, preferably sodium.

Cationic surface-active agents (d) include but are not limited to surface-active agents as disclosed in U.S. 6,464,990. They are typically selected from the group of quaternary ammonium salts, fatty amines and salts thereof. The quaternary ammonium salts include, for example: those which exhibit the following formula: 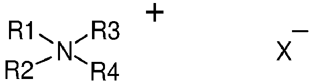 wherein the R1 to R4 radicals, which can be identical or different, represent a linear or branched aliphatic radical comprising from 1 to 30 carbon atoms or an aromatic radical, such as aryl or alkylaryl. The aliphatic radicals can comprise heteroatoms, such as oxygen, nitrogen, sulfur and halogens. The aliphatic radicals include alkyl, alkoxy, polyoxy(C₂-C₆)alkylene, alkylamido, (C₁₂-C₂₂)alkylamido(C₂-C6) alkyl, (C₁₂-C₂₂)alkyl acetate and hydroxyalkyl radicals comprising approximately from 1 to 30 carbon atoms; X is an anion selected from halides, phosphates, acetates, lactates, (C₂-C₆)alkyl sulfates, and alkyl- or alkylarylsulfonates. Preference is given, as quaternary ammonium salts to tetraalkylammonium chlorides, such as dialkyldimethylammonium and alkyltrimethylammonium chlorides in which the alkyl radical comprises approximately from 12 to 22 carbon atoms, in particularly behenyltrimethyl-ammonium, distearyldimethylammonium, cetyltrimethylammonium and benzyldimethylstearylammonium chlorides, or alternatively, stearamidopropyl-dimethyl(myristyl acetate) ammonium chloride; imidazolinium quaternary ammonium salts, such as those of formula: 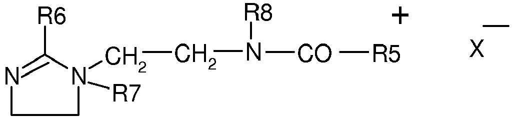 wherein R5 represents an alkenyl or alkyl radical comprising from 8 to 30 carbon atoms, for example derived from tallow fatty acids; R6 represents a hydrogen atom, an alkyl radical comprising from 1 to 4 carbon atoms or an alkenyl or alkyl radical comprising from 8 to 30 carbon atoms; R7 represents an alkyl radical comprising from 1 to 4 carbon atoms; R8 represents a hydrogen atom or an alkyl radical comprising from 1 to 4 carbon atoms; and X is an anion selected from the group of the halides, phosphates, acetates, lactates, alkyl sulfates, or alkyl, and alkylarylsulfonates. R5 and R6 preferably denote a mixture of alkenyl or alkyl radicals comprising from 12 to 21 carbon atoms, for example derived from tallow fatty acids, R7 preferably denotes a methyl radical and R8 preferably denotes hydrogen. Quaternary diammonium salts are also contemplated, such as propanetallowdiammonium dichloride.

Fatty amines include, but are not limited to those of formula:

R9(CONH)ₙ(CH₂)ₘN(R11)R10

wherein R9 is an optionally saturated and/or branched hydrocarbon chain, having between 8 and 30 carbon atoms, preferably between 10 and 24 carbon atoms; R10 and R11 are selected from H and an optionally saturated and/or branched hydrocarbon chain, having between 1 and 10 carbon atoms; preferably between 1 and 4 carbon atoms;
m is an integer between 1 and 10 and is preferably between 1 and 5; and n is either 0 or 1.

Examples of fatty amines include, but are not limited to, stearylamine, aminoethyl-ethanolamide stearate, diethylenetriamine stearate, palmitamidopropyldimethyl-amine, palmitamidopropyldiethylamine, palmitamidoethyldiethylamine, palmitamidoethyldimethylamine. Commercially available fatty amines include, but are not limited to, Incromine™ BB from Croda, Amidoamine™ MSP from Nikkol, and Lexamine™ series from Inolex, the Acetamine series from Kao Corp; Berol 380, 390, 453 and 455, and Ethomeen™ series from Akzo Nobel, and Marlazin™ L10, OL2, OL20, T15/2, T50 from Condea Chemie.

As described above, the surface-active agents form the lamellar liquid crystal coating of the oily globules suspended within the aqueous phase of the oil-in-water emulsion of the present invention. The amount of the three surface-active agents utilized in the oil-in-water emulsion of the present invention is typically from about 20, preferably from about 35 to about 65, preferably to about 55 weight percent of non-ionic lipophilic surface-active agent, from about 15, preferably from about 25 to about 50, preferably to about 40 weight percent of non-ionic hydrophilic surface-active agent and from about 5, preferably from about 10 to about 45, preferably to about 35 weight percent of ionic surface-active agent; based on the total combined weight of surface active agents. The coating of the oily globules comprises a total amount of hydrophilic surface-active agent, lipophilic surface-active agent and ionic surface-active agent to be between about 2 and about 20 percent by weight, based on the total weight of the oil-in-water emulsion. Preferably the total amount is from about 2.5, more preferably from about 3 to 10, more preferably to about 6 weight percent, based on the total weight of the oil-in-water emulsion.

The ratio of the total weight of the surface-active compounds to the total weight of oil is typically from 1:2.5 to 1:25.

The amount of the polymeric modifier that may be utilized in one embodiment of the oil-in-water emulsion of the present disclosure is typically from about 0.2, preferably from about 2 to about 40, preferably to about 20 weight percent based on the total weight of the oil-in-water emulsion.

The aqueous phase is typically water, for example, deionized water. The aqueous phase may also contain other additives such as compounds that lower the freezing point, for example alcohols, e.g. isopropyl alcohol and propylene glycol; pH buffering agents, for example alkali phosphates such as sodium phosphate monobasic monohydrate, sodium phosphate dibasic; biocides, for example Proxel GXL; and antifoams, for example octamethylcyclotetrasiloxane (Antifoam A from Dow Corning). Other additives and/or adjuvants can also be present in the aqueous phase as long as the stability of the oil-in-water emulsion is still maintained. Other additives also include water-soluble agriculturally active compounds.

The oil phase or the coated oily globules are from 5, preferably from 8 and more preferably from 10 to 50 percent, preferably to 45 and most preferably to 40 weight percent, based on the total weight of the oil-in-water emulsion composition. The oil/water ratio is typically less than or equal to 1.

Other additives and/or adjuvants can also be present within the oil-in-water emulsion of the present invention, as long as the stability and activity of the oil-in-water emulsion is still obtained. The oil-in-water emulsions of the present invention may additionally contain adjuvant surface-active agents to enhance deposition, wetting and penetration of the agriculturally active ingredient onto the target site, e.g. crop, weed or organism. These adjuvant surface-active agents may optionally be employed as a component of the emulsion in either the oil or water phase, or as a tank mix component; the use of and amount desired being well known by those skilled in the art. Suitable adjuvant surface-active agents include, but are not limited to ethoxylated nonyl phenols, ethoxylated synthetic or natural alcohols, salts of the esters or sulphosuccinic acids, ethoxylated organosilicones, ethoxylated fatty amines and blends of surface-active agents with mineral or vegetable oils.

One embodiment of the oil-in-water emulsion of the present invention can be prepared according to the process described in U.S. 5,925,364. The agriculturally active ingredient or a combination of agriculturally active ingredients is first melted or dissolved into the polymeric modifier, adding solvent if desired, after which the nonionic surface-active agent(s) is dissolved into the mixture. The then mixture is homogenized by cavitation using a high pressure homogenizer, to provide the small particle sized oily globules. The mean size of the coated oily globules is typically less than 800 nanometers, preferably less than 500 nanometers and most preferably about 200 nanometers, as determined using laser diffraction particle size analysis and scanning electron microscopy.

In one embodiment, the oil-in-water emulsion is prepared by:
1) melting or dissolving an agriculturally active ingredient(s) into the polymeric modifier and optionally a suitable solvent;
2) mixing an oil phase, comprising the lipophilic surfactant, the vegetable based oil, the polymeric modifier containing the dissolved agriculturally active ingredient(s), the hydrophilic surfactant, the ionic surfactant, an agriculturally active compound and optionally a suitable solvent and (B) an aqueous phase to obtain a mixture; and
3) homogenizing the mixture by subjecting the mixture to cavitation.

In the first step, the mixture can be formed by conventional stirring, for example, using a high shear homogenizer rotating at a rate of approximately between 2000 and 7000 rpm for a time approximately between 5 and 60 minutes and at a temperature between approximately 20°C and 95°C.

The homogenization can be performed by using a high pressure homogenizer operating at pressures between approximately 200 and 1000 bar as is well known to those skilled in the art. The process is performed by successive passages, generally from 2 to 12 passages, at a selected pressure; the mixture being returned to normal pressure between each passage. The homogenization of the second step may also be carried out under the action of ultrasound or alternatively by the use of a homogenizer equipped with a rotor-stator type head.

Another embodiment of the oil-in-water emulsion of the present disclosure may be prepared without the polymeric modifier. In this embodiment, agriculturally active ingredients that are in liquid form or soluble in a suitable solvent at a relevant storage temperature may be used. The method is the same as described above with the exception that agriculturally active ingredient is not melted or dissolved in a polymeric modifier. Instead the agriculturally active ingredient is added directly to the oil phase.

Another embodiment of the present invention is the use of the oil-in-water emulsion in agricultural applications to control, prevent or eliminate unwanted living organisms, e.g. fungi, weeds, insects, bacteria or other microorganisms and other pests. This would include its' use for protection of a plant against attack by a phytopathogenic organism or the treatment of a plant already infested by a phytopathogenic organism, comprising applying the oil-in-water emulsion composition, to soil, a plant, a part of a plant, foliage, flowers, fruit, and/or seeds in a disease inhibiting and phytologically acceptable amount. The term "disease inhibiting and phytologically acceptable amount" refers to an amount of a compound that kills or inhibits the plant disease for which control is desired, but is not significantly toxic to the plant. The exact concentration of active compound required varies with the fungal disease to be controlled, the type of formulations employed, the method of application, the particular plant species, climate conditions, and the like, as is well known in the art.

Additionally, the oil-in-water emulsions of the present invention are useful for the control of insects or other pests, e.g. rodents. Therefore, the present invention also is directed to a method for inhibiting an insect or pest which comprises applying to a locus of the insect or pest an oil-in-water emulsion comprising an insect-inhibiting amount of an agriculturally active compound for such use. The "locus" of insects or pests is a term used herein to refer to the environment in which the insects or pests live or where their eggs are present, including the air surrounding them, the food they eat, or objects which they contact. For example, insects which eat or contact edible or ornamental plants can be controlled by applying the active compound to plant parts such as the seed, seedling, or cutting which is planted, the leaves, stems, fruits, grain, or roots, or to the soil in which the roots are growing . It is contemplated that the agriculturally active compounds and oil-in-water emulsions containing such, might also be useful to protect textiles, paper, stored grain, seeds, domesticated animals, buildings or human beings by applying an active compound to or near such objects. The term "inhibiting an insect or pest" refers to a decrease in the numbers of living insects or pests, or a decrease in the number of viable insect eggs. The extent of reduction accomplished by a compound depends, of course, upon the application rate of the compound, the particular compound used, and the target insect or pest species. At least an inactivating amount should be used. The terms "insect or pest-inactivating amount" are used to describe the amount, which is sufficient to cause a measurable reduction in the treated insect or pest population, as is well known in the art.

The locus to which a compound or composition is applied can be any locus inhabited by an insect, mite or pest, for example, vegetable crops, fruit and nut trees, grape vines, ornamental plants, domesticated animals, the interior or exterior surfaces of buildings, and the soil around buildings.

Because of the unique ability of insect eggs to resist toxicant action, repeated applications may be desirable to control newly emerged larvae, as is true of other known insecticides and acaricides.

Additionally, the present invention relates to the use of oil-in-water emulsions comprising agriculturally active compounds which are herbicides. The term herbicide is used herein to mean an active ingredient that kills, controls or otherwise adversely modifies the growth of plants. An herbicidally effective or vegetation controlling amount is an amount of active ingredient which causes an adversely modifying effect and includes deviations from natural development, killing, regulation, desiccation, retardation, and the like. The terms plants and vegetation include emerging seedlings and established vegetation.

Herbicidal activity is exhibited when they are applied directly to the locus of the undesirable plant thereof at any stage of growth or before emergence of the weeds. The effect observed depends upon the plant species to be controlled, the stage of growth of the plant, the particle size of solid components, the environmental conditions at the time of use, the specific adjuvants and carriers employed, the soil type, and the like, as well as the amount of chemical applied. These and other factors can be adjusted as is known in the art to promote selective herbicidal action. Generally, it is preferred to apply such herbicides post emergence to relatively immature undesirable vegetation to achieve the maximum control of weeds.

Another specific aspect of the present invention is a method of preventing or controlling pests such as nematodes, mites, arthropods, rodents, termites, bacteria or other microorganisms, comprising applying to a locus where control or prevention is desired a composition of the present invention which comprises the appropriate active compound such as a nematocide, miticide, arthropodicide, rodenticide, termiticide or biocide.

The actual amount of agriculturally active compound to be applied to loci of disease, insects and mites, weeds or other pests is well known in the art and can readily be determined by those skilled in the art in view of the teachings above.

The composition of the present invention surprisingly offers stable agricultural oil-in-water emulsions having low viscosity and long term shelf life. Additionally, the stable agricultural oil-in-water emulsions of the present invention can offer other surprising improvements, e.g. efficacy.

The following examples are provided to illustrate the present invention. The examples are not intended to limit the scope of the present invention and they should not be so interpreted. Amounts are in weight parts or weight percentages unless otherwise indicated.

### EXAMPLES

These examples are provided to further illustrate the invention and are not meant to be construed as limiting.

As disclosed herein, all temperatures are given in degrees Celsius and all percentages are weight percentages unless otherwise stated.

In these examples, the process is performed using the following procedure:
For Examples 1-3, the agriculturally active ingredient and the VEGETABLE BASED OIL are added to the oil phase. For Examples 4 and 5 which include a polymeric modifier, the solid agriculturally active ingredient is melted or dissolved into the polymeric modifier. The polymeric modifier is then mixed into the oil phase A. The oil phase A and the aqueous phase B are heated separately to the desired temperature. Phase B is poured into Phase A, with stirring of 4000 - 8000 rpm provided by a Silverson L4RT high shear homogenizer fitted with a square hole high shear screen. Stirring and temperature conditions are maintained for 15 minutes.

The mixture is then introduced into a Niro Soavi high pressure 2-stage homogenizer of type Panda 2K, which is adjusted to a pressure of 500 to 900 bar for 2 to 12 successive passages.

A stabilized oil-in-water emulsion is thus obtained, the oily globules of which have a mean diameter of typically around 200 nm.

### Example 1: Myclobutanil oil-in-water emulsion (does not belong to the present invention)

| **Oil Phase A** | wt% |
|---|---|
| Myclobutanil | 4.50 |
| Soybean oil | 4.00 |
| Brij 72 | 2.65 |
| Sorbitan (40EO) stearate (Tween 61 by Uniqema) | 1.85 |
| Oil (A150 ND) | 11.00 |

| **Aqueous Phase B** | |
|---|---|
| Deionized water | 65.20 |
| Propylene glycol | 10.00 |
| Proxel GLX Biocide | 0.30 |
| n-Stearoyl glutamic acid di-sodium salt (Amisoft HS-21P by Ajinomoto) | 0.50 |

The size of the oily globules in the oil-in-water emulsion as determined by a Malvern Zetasizer was 184 nm. The oil-in-water emulsion was stable under accelerated storage test conditions of 2 weeks at 5°C, 54°C, and cycling temperature from 40°C to -10°C with no change in the size of the oily globules and no sedimentation or syneresis. A control sample made without the addition of soybean oil showed significant oil droplet growth at under all of the conditions described above.

### Example 2: Fluroxypyr MHE oil-in-water emulsion

| **Oil Phase A** | wt% |
|---|---|
| Fluroxypyr methylheptyl ester | 27.5 |
| Soybean oil | 2.0 |
| Diglycerol monostearate (Nikkol DGMS by Nikko Chemical Co.) | 2.6 |
| Sorbitan (40EO) stearate (Tween 61 by Uniqema) | 1.9 |
| Oil (AMD 810) | 11.5 |

| **Aqueous Phase B** | |
|---|---|
| Deionized water | 49.2 |
| Sodium phosphate, diabasic | 0.3 |
| Sodium phosphate, monobasic monohydrate | 0.2 |
| Proxel GLX Biocide | 0.3 |
| n-Stearoyl glutamic acid di-sodium salt (Amisoft HS-21P by Ajinomoto) | 0.5 |
| Propylene glycol | 4 |

The size of the oily globules in the oil-in-water emulsion as determined by a Malvern Zetasizer was 251 nm. The oil-in-water emulsion was stable under accelerated storage test conditions of 11 days at 5°C and 54°C with no change in the size of the oily globules and no sedimentation or syneresis, and slight increase after 11 days at cycling temperature from -10 °C to 40°C . A control sample made without the addition of soybean oil was phase separated after 2 days at the cycling temperature.

### Example 3: Propiconazole oil-in-water emulsion

| **Oil Phase A** | wt% |
|---|---|
| Propiconazole technical | 15.5 |
| Soybean oil | 5.0 |
| Brij 72 | 2.0 |
| Sorbitan (40EO) stearate (Tween 61 by Uniqema) | 1.5 |
| Oil (A150 ND) | 5.0 |

| **Aqueous Phase B** | |
|---|---|
| Deionized water | 65.5 |
| Propylene glycol | 5 |
| Cedepal TD-407 | 0.5 |

The size of the oily globules in the oil-in-water emulsion was determined by a Malvern Zetasizer was 185 nm. The oil-in-water emulsion was stable under accelerated storage test conditions of 8 week at 5°C, 54°C, and cycling temperature from 40°C to -10°C with no change in the size of the oily globules and no sedimentation or syneresis. A control sample made without the addition of soybean oil was less stable and showed oil droplet growth at the same storage test conditions.

### Example 4: Fluroxypyr MHE oil-in-water emulsion

| **Oil Phase A** | wt% |
|---|---|
| Fluroxypyr methylheptyl ester | 27.50 |
| Ethocel std 10 | 2.59 |
| Diglycerol monostearate (Nikkol DGMS by Nikko Chemical Co.) | 2.57 |
| Sorbitan (40EO) stearate (Tween 61 by Uniqema) | 1.93 |
| Soybean oil | 2.00 |
| Oil (AMD 810) | 11.51 |

| **Aqueous Phase B** | |
|---|---|
| Deionized water | 46.60 |
| n-Stearoyl glutamic acid di-sodium salt (Amisoft HS-21P by Ajinomoto) | 0.50 |
| Proxel GXL Biocide | 0.30 |
| Propylene glycol | 4.00 |
| Sodium phosphate, diabasic | 0.30 |
| Sodium phosphate, monobasic monohydrate | 0.20 |

The size of the oily globules in the oil-in-water emulsion as determined by a Malvern Zetasizer was 332 nm. The oil-in-water emulsion was stable under accelerated storage test conditions of 16 days at 5°C and 54°C with no change in the size of the oily globules and no sedimentation or syneresis. A control sample made without the addition of soybean oil was less stable and showed oil droplets growth at the same storage test conditions.

### Example 5: Chlorpyrifos oil-in-water emulsion

| **Oil Phase A** | wt% |
|---|---|
| Chloropyrifos | 20.00 |
| Ethocel std 10 | 2.00 |
| Soybean oil | 4.00 |
| Brij 72 | 2.59 |
| Sorbitan (40EO) stearate (Tween 61 by Uniqema) | 1.93 |
| Oil (AMD 810) | 8.00 |

| **Aqueous Phase B** | |
|---|---|
| Deionized water | 50.98 |
| n-Stearoyl glutamic acid di-sodium salt (Amisoft HS-21P by Ajinomoto) | 0.50 |
| Propylene glycol | 10.00 |

The size of the oily globules in the oil-in-water emulsion as determined by a Malvern Zetasizer was 185 nm. The oil-in-water emulsion was stable under accelerated storage test conditions of 3 week at 5°C, 54°C, and cycling temperature from 40°C to -10°C. A control sample made without the addition of soybean oil having the same total weight percent of oil phase showed significant oil droplet size increase, and was destabilized at both the 54°C and 5°C storage condition during the same time period.

## Claims

1. An oil-in-water emulsion composition having an oil phase and water phase, the oil-in-water emulsion composition comprising:
an oil selected from the group consisting of short-chain fatty acid triglycerides, silicone oils, petroleum fractions or hydrocarbons, heavy aromatic naphtha solvents, light aromatic naphtha solvents, hydrotreated light petroleum distillates, paraffinic solvents, mineral oil, alkylbenzenes and paraffinic oils;
a vegetable based oil having low water solubility and being compatible with the oil phase;
at least one agriculturally active compound, wherein the total amount of the agriculturally active compound is from 10 to 35 wt.-% based on the total weight of the oil-in-water emulsion;
at least one non-ionic lipophilic surface-active agent;
at least one non-ionic hydrophilic surface-active agent;
at least one ionic surface-active agent, and
water,
wherein the oily globules have a mean particle diameter of less than 800 nanometers.

2. The composition of Claim 1, further comprising a polymeric modifier being compatible with the oil phase.

3. The composition of Claim 1 or Claim 2, wherein the non-ionic lipophilic surface-active agent has an Hydrophilic Lipophilic Balance of between 2 and 5, preferably, wherein the non-ionic lipophilic surface-active agent is selected from the group consisting of optionally ethoxylated mono- or polyalkyl ethers or esters of glycerol or polyglycerol, optionally ethoxylated mono- or polyalkyl ethers or esters of sorbitan, mono- or polyalkyl ethers or esters of pentaerythritol, mono- or polyalkyl ethers or esters of polyoxyethylene, and mono- or polyalkyl ethers or esters of sugars, preferably, wherein the non-ionic lipophilic surface-active agent is selected from the group consisting of sucrose distearate, diglyceryl distearate, tetraglyceryl tristearate, decaglyceryl decastearate, diglyceryl monostearate, hexaglyceryltristearate, decaglyceryl pentastearate, sorbitan monostearate, sorbitan tristearate, diethylene glycol monostearate, the ester of glycerol and palmitic and stearic acids, polyoxyethylenated monostearate 2 EO (containing 2 ethylene oxide units), glyceryl mono- and dibehenate and pentaerythritol tetrastearate.

4. The composition of Claim 1 or Claim 2, wherein the non-ionic hydrophilic surface-active agent has an Hydrophilic Lipophilic Balance between 8 and 12, preferably, wherein the non-ionic hydrophilic surface-active agent is selected from the group consisting of mono- or polyalkyl ethers or esters of polyethoxylated sorbitan, mono- or polyalkyl ethers or esters of polyoxyethylene, mono- or polyalkyl ethers or esters ofpolyglycerol, block copolymers of polyoxyethylene with polyoxypropylene or polyoxybutylene, and mono- or polyalkyl ethers or esters of optionally ethoxylated sugars, preferably, wherein the non-ionic hydrophilic surface-active agent is selected from the group consisting of polyoxyethylenated sorbitan monostearate 4 EO, polyoxyethylenated sorbitan tristearate 20 EO, polyoxyethylenated sorbitan tristearate 20 EO, polyoxyethylenated monostearate 8 EO, hexaglyceryl monostearate, polyoxyethylenated monostearate 10 EO, polyoxyethylenated distearate 12 EO and polyoxyethylenated methylglucose distearate 20 EO.

5. The composition of Claim 1 or Claim 2, wherein the ionic surface-active agent is selected from the group consisting of (a) neutralized anionic surface-active agents, (b) amphoteric surface-active agents, (c) alkylsulphonic derivatives and (d) cationic surface-active agents.

6. The composition of Claim 5, wherein the ionic surface-active agent is selected from the group consisting of:
- alkali metal salts of dicetyl phosphate and dimyristyl phosphate, in particular sodium and potassium salts;
- alkali metal salts of cholesteryl sulphate and cholesteryl phosphate, especially the sodium salts;
- lipoamino acids and their salts, such as mono- and disodium acylglutamates, such as the disodium salt of N-stearoyl-L-glutamic acid, the sodium salts ofphosphatidic acid;
- phospholipids;
- the mono- and disodium salts of acylglutamic acids, in particular N-stearoylglutamic acid; and
- alkyl ether citrates.

7. The composition of Claim 5, wherein the ionic surface-active agent is (a) a phospholipid, (b) an alkylsulphonic derivative, or (c) a compound selected from the group consisting of quaternary ammonium salts, fatty amines and salts thereof.

8. The composition of Claim 1 or Claim 2, wherein the agriculturally active compound is selected from a group consisting of fungicides, insecticides, nematocides, miticides, biocides, termiticides, rodenticides, arthropodicides, and herbicides.

9. The composition of Claim 2, wherein the agriculturally active compound is selected from the group consisting essentially of fluroxypyr meptyl, chlorpyrifos, chlorpyrifos methyl, trifluralin, cyhalofop butyl, oxyfluorfen, ethalfluralin, benfluralin, myclobutanil, Acequinocyl, Alpha-cypermethrin, Amitraz, Bensultap, Beta-cyfluthrin, Beta-cypermethrin, Bifenox, Bifenthrin, Bioresmethrin, Bromoxynil Octanoate, Butralin, Cyflufenamid, Cyfluthrin, Cypermethrin, Diclofop-methyl, Dicofol, Esfenvalerate, Ethalfluralin, Etofenprox, Fenazaquin, Fenoxaprop-P-ethyl, Fenpropathrin, Fenvalerate, Flumiclorac-pentyl, Fluoroglycofen-ethyl, Flurazole, Haloxyfop-etotyl, Indoxacarb, Lambda-cyhalothrin, Metamifop, Methoxychlor, Oxyfluorfen, Pendimethalin, Permethrin, Propaquizafop, Pyributicarb, Quizalofop-P-ethyl, Trifloxystrobin, Bromophos, Fenoxaprop-ethyl, Fluazolate, Nitrofen, Profluralin and Propiconazole.

10. The composition of Claim 1 or Claim 2, wherein the vegetable based oil is selected from the group consisting essentially of soybean oil, rape seed oil, soy oil, coconut oil, cotton seed oil, palm oil, peanut oil, linseed oil, canola oil, olive oil, sunflower oil and corn oil.

11. The composition of Claim 2, wherein the polymeric modifier is selected from the group consisting of ethyl cellulose, polyacrylate, latex, polycarbonate, polyvinyl acetate homopolymers and copolymers, polyolefin, polyurethane, polyisobutylene, polybutene, vinyl polymers, polyester, polyether and polyacrylonnitrile.

12. The composition of Claim 2, wherein the oil-in-water emulsion composition is from 1 to 60 weight percent total oil phase, from 0.2 to 40 weight percent polymeric modifier, from 10 to 35 weight percent agriculturally active compound, from 0.1 to 20 weight percent vegetable based oil, from 0.4 to 13 weight percent non-ionic lipophilic surface-active agent, from 0.3 to 10 weight percent non-ionic hydrophilic surface-active agent, from 0.1 to 9 weight percent ionic surface-active agent, based on a total weight of the oil-in-water emulsion composition.

13. The composition of Claim 1 or Claim 2, wherein the oil-in-water emulsion composition is from 1 to 60 weight percent total oil phase, from 0.1 to 20 weight percent vegetable based oil, from 10 to 35 weight percent agriculturally active compound, from 0.4 to 13 weight percent non-ionic lipophilic surface-active agent, from 0.3 to 10 weight percent non-ionic hydrophilic surface-active agent, from 0.1 to 9 weight percent ionic surface-active agent, based on a total weight of the oil-in-water emulsion composition.

14. A method of preventing or controlling unwanted vegetation, fungi, insects, nematodes, mites, arthropods, rodents, termites, or bacteria and other microorganisms, comprising applying to a locus where control or prevention is desired a composition of Claim 8, wherein said locus is not a human or an animal.

## Patentansprüche

1. Öl-in-Wasser-Emulsionszusammensetzung mit einer Ölphase und einer Wasserphase, wobei die Öl-in-Wasser-Emulsionszusammensetzung umfasst:
ein Öl, ausgewählt aus der Gruppe, bestehend aus kurzkettigen Fettsäuretriglceriden, Silikonölen, Erdölfraktionen oder Kohlenwasserstoffen, schweren aromatischen Naphtha-Lösungsmitteln, leichten aromatischen Naphtha-Lösungsmitteln, Wasserstoff-behandelten leichten Erdöldestillaten, paraffinischen Lösungsmitteln, Mineralöl, Alkylbenzolen, und paraffinischen Ölen;
ein Öl auf Pflanzenbasis mit einer geringen Wasserlöslichkeit und das kompatibel mit der Ölphase ist;
mindestens eine landwirtschaftlich aktive Verbindung, worin die Menge der landwirtschaftlich aktiven Verbindung von 10 bis 35 Gew.-% auf Basis des Gesamtgewichts der Öl-in-Wasser-Emulsion ist;
mindestens ein nichtionisches lipophiles oberflächenaktives Mittel;
mindestens ein nichtionisches hydrophiles oberflächenaktives Mittel;
mindestens ein ionisches oberflächenaktives Mittel; und
Wasser,
worin die Ölkügelchen einen mittleren Teilchendurchmesser von weniger als 800 Nanometer haben.

2. Zusammensetzung nach Anspruch 1, weiterhin umfassend ein polymeres Modifizierungsmittel, das kompatibel mit der Ölphase ist.

3. Zusammensetzung nach Anspruch 1 oder 2, worin das nichtionische lipophile oberflächenaktive Mittel einen Hydrophil-Lipophil-Anteil (HLB) von vorzugsweise zwischen 2 und 5 aufweist, worin das nichtionische lipophile oberflächenaktive Mittel vorzugsweise ausgewählt ist aus der Gruppe, bestehend aus optional ethoxylierten Mono- oder Polyalkylethern oder - estern von Glycerol oder Polyglycerol, optional ethoxylierten Mono- oder Polyalkylethern oder -estern von Sorbitan, Mono- oder Polyalkylethern oder -estern von Pentaerythtrit, Mono- oder Polyalkylethern oder -estern von Polyoxyethylen und Mono- oder Polyalkylethern oder -estern von Zuckern, worin das nichtionische lipophile oberflächenaktive Mittel ausgewählt ist aus der Gruppe, bestehend aus Sucrosedistearat, Diglyceryldistearat, Tetraglyceryltristearat, Decaglyceryldecastearat, Diglycerylmonostearat, Hexaglyceryltristearat, Decaglycerylpentastearat, Sorbitanmonostearat, Sorbitantristearat, Diethylenglykolmonostearat, dem Ester von Glycerol und Palmitin und Stearinsäuren, polyoxyethyleniertes Monostarat 2 EO (enthaltend 2 Ethylenoxideinheiten), Glycerylmono- und -dibehenat und Pentaerthrittetrastearat.

4. Zusammensetzung nach Anspruch 1 oder 2, worin das nichtionische hydrophile oberflächenaktive Mittel vorzugsweise einen Hydrophil-Lipophil-Anteil (HLB) zwischen 8 und 12 aufweist, worin das nichtionische hydrophile oberflächenaktive Mittel ausgewählt ist aus der Gruppe, bestehend aus Mono- oder Polyalkylethern oder -estern von polyethoxyliertem Sorbitan, Mono- oder Polyalkylethern oder -estern von Polyoxyethylen, Mono- oder Polyalkylethern oder -estern von Polyglycerol, Blockcopolymeren von Polyoxyethylen mit Polyoxypropylen oder Polyoxybutylen und Mono- oder Polyalkylethern oder -estern von optional ethoxylierten Zuckern, worin das nichtionische hydrophile oberflächenaktive Mittel ausgewählt ist aus der Gruppe, bestehend aus polyoxyethyleniertem Sorbitanmonostearat 4 EO, polyoxyethyleniertem Sorbitantristearat 20 EO, polyoxyethyleniertem Sorbitantristearat 20 EO, polyoxyethyleniertem Monostearat 8 EO, Hexaglycerylmonostearat, polyoxyethyleniertem Monostearat 10 EO, polyoxyethyleniertem Distearat 12 EO und polyoxyethyleniertem Methylglucosedistearat 20 EO.

5. Zusammensetzung nach Anspruch 1 oder 2, worin das ionische oberflächenaktive Mittel ausgewählt ist aus der Gruppe, bestehend aus (a) neutralisierten anionischen oberflächenaktiven Mitteln, (b) amphoteren oberflächenaktiven Mitteln, (c) Alkylsulfonsäurederivaten und (d) kationischen oberflächenaktiven Mitteln.

6. Zusammensetzung nach Anspruch 5, worin das ionische oberflächenaktive Mittel ausgewählt ist aus der Gruppe, bestehend aus:
- Alkalimetallsalzen von Dicetylphosphat und Dimyristylphosphat, insbesondere Natrium- und Kaliumsalze;
- Alkalimetallsalzen von Cholesterylsulfat und Cholesterylphosphat, insbesondere Natriumsalzen;
- Lipoaminosäuren und ihren Salzen, wie etwa Mono- und Dinatriumacylglutamate, wie etwa das Dinatriumsalz von N-Stearoyl-L-glutaminsäure, die Natriumsalze von Phosphatidinsäure;
- Phospholipiden;
- den Mono- und Dinatriumsalzen von Acylglutaminsäuren, insbesondere N-Stearylglutaminsäure; und
- Alkylethercitraten.

7. Zusammensetzung nach Anspruch 5, worin das ionische oberflächenaktive Mittel (a) ein Phospholipid, (b) ein Alkylsulfonsäurederivat oder (c) eine Verbindung ist, ausgewählt aus einer Gruppe, bestehend aus quartären Ammoniumsalzen, Fettaminen und Salzen davon.

8. Zusammensetzung nach Anspruch 1 oder Anspruch 2, worin die landwirtschaftlich aktive Verbindung ausgewählt ist aus einer Gruppe, bestehend aus Fugiziden, Insektiziden, Nematoziden, Mitiziden, Bioziden, Termitiziden, Rodentiziden, Arthropoziden und Herbiziden.

9. Zusammensetzung nach Anspruch 2, worin die landwirtschaftlich aktive Verbindung ausgewählt ist aus der Gruppe, im wesentlichen bestehend aus Fluroxypyr-meptyl, Chlorpyrifos, Chlorpyrifos-methyl, Trifluralin, Cyhalofop-butyl, Oxyfluorofen, Ethalfluralin, Benfluralin, Myclobutanil, Acequinocyl, Alpha-cypermethrin, Amitraz, Bensultrap, Beta-cyfluthrin, Beta-cypermethrin, Bifenox, Bifenthrin, Bioresmethrin, Bromoxynil-Octanoat, Butralin, Cyflufenamid, Cyfluthrin, Cypermethrin, Dichlofop-methyl, Dicofol, Esfenvalerat, Ethalfluralin, Etofenprox, Fenazaquin, Fenoxaprop-P-ethyl, Fenpropathrin, Fenvalerat, Flumiclorac-pentyl, Fluoroglycofen-ethyl, Flurazol, Haloxyfop-etotyl, Indoxacarb, Lambda-cyhalothrin, Metamifop, Methoxychlor, Oxyfluorfen, Pendimethalin, Permethrin, Propaquizafop, Pyributicarb, Quizalofop-P-ethyl, Trifloxystrobin, Bromophos, Fenoxaprop-ethyl, Fluazolat, Nitrofen, Profluralin und Propiconazol.

10. Zusammensetzung nach Anspruch 1 oder Anspruch 2, worin das Öl auf Pflanzenbasis ausgewählt ist aus der Gruppe, im Wesentlichen bestehend aus Sojabohnenöl, Rapssamenöl, Sojaöl, Kokosnussöl, Baumwollsamenöl, Palmöl, Erdnussöl, Leinsamenöl, Rapsöl, Olivenöl, Sonnenblumenöl und Maisöl.

11. Zusammensetzung nach Anspruch 2, worin das polymere Modifizierungsmittel ausgewählt ist aus der Gruppe, bestehend aus Ethylcellulose, Polyacrylat, Latex, Polycarbonat, Polyvinylacetathomopolymeren und -copolymeren, Polyolefin, Polyurethan, Polyisobutylen, Polybuten, Vinylpolymeren, Polyester, Polyether und Polyacrylnitril.

12. Zusammensetzung nach Anspruch 2, worin die Öl-in-Wasser-Emulsionszusammensetzung von 1 bis 60 Gewichtsprozent gesamte Ölphase, von 0,2 bis 40 Gewichtsprozent polymeres Modifizierungsmittel, von 10 bis 35 Gewichtsprozent landwirtschaftlich aktive Verbindung, von 0,1 bis 20 Gewichtsprozent Öl auf Pflanzenbasis, von 0,4 bis 13 Gewichtsprozent nichtionisches lipophiles oberflächenaktives Mittel, von 0,3 bis 10 Gewichtsprozent nichtionisches hydrophiles oberflächenaktives Mittel, von 0,1 bis 9 Gewichtsprozent ionisches oberflächenaktives Mittel, basierend auf dem Gesamtgewicht der ÖI-in-Wasser-Emulsionszusammensetzung, ist.

13. Zusammensetzung nach Anspruch 1 oder Anspruch 2, worin die Öl-in-Wasser-Emulsionszusammensetzung von 1 bis 60 Gewichtsprozent gesamte Ölphase, von 0,1 bis 20 Gewichtsprozent Öl auf Pflanzenbasis, von 10 bis 35 Gewichtsprozent landwirtschaftlich aktive Verbindung, von 0,4 bis 13 Gewichtsprozent nichtionisches lipophiles oberflächenaktives Mittel, von 0,3 bis 10 Gewichtsprozent nichtionisches hydrophiles oberflächenaktives Mittel, von 0,1 bis 9 Gewichtsprozent ionisches oberflächenaktives Mittel, basierend auf dem Gesamtgewicht der Öl-in-Wasser-Emulsionszusammensetzung, ist.

14. Verfahren zur Verhinderung oder Bekämpfung von unerwünschter Vegetation, Pilzen, Insekten, Nematoden, Milben, Arthropoden, Nagern, Termiten oder Bakterien und anderen Mikroorganismen, umfassend das Anwenden einer Zusammensetzung nach Anspruch 8 auf einen Ort, an welchem eine Bekämpfung oder Vorbeugung gewünscht ist, wobei der Ort weder ein Mensch noch ein Tier ist.

## Revendications

1. Composition d'émulsion huile-dans-eau comportant une phase huileuse et une phase aqueuse, laquelle composition d'émulsion huile-dans-eau comprend :
- une huile choisie dans l'ensemble constitué par les triglycérides d'acides gras à chaîne courte, les huiles de silicone, les fractions pétrolières ou hydrocarbures pétroliers, les solvants de type naphta aromatique lourd, les solvants de type naphta aromatique léger, les distillats pétroliers légers hydrotraités, les solvants paraffiniques, les huiles minérales, les alkyl-benzènes et les huiles paraffiniques ;
- une huile végétale qui est peu soluble dans l'eau et compatible avec la phase huileuse ;
- au moins un composé actif en agriculture, étant entendu que la proportion totale du ou des composé(s) actif(s) en agriculture vaut de 10 à 35 %, en poids rapporté au poids total de l'émulsion huile-dans-eau ;
- au moins un agent tensioactif lipophile non-ionique,
- au moins un agent tensioactif hydrophile non-ionique,
- au moins un agent tensioactif ionique,
- et de l'eau,
et dans laquelle composition le diamètre moyen des globules huileux est inférieur à 800 nanomètres.

2. Composition conforme à la revendication 1, qui comprend en outre un modificateur polymère compatible avec la phase huileuse.

3. Composition conforme à la revendication 1 ou 2, dans laquelle l'agent tensioactif lipophile non-ionique présente un rapport hydro-lipophile valant entre 2 et 5, et de préférence, dans laquelle cet agent tensioactif lipophile non-ionique est choisi dans l'ensemble formé par les éthers ou esters mono-alkyliques ou poly-alkyliques de glycérol ou de poly-glycérol, en option éthoxylés, les éthers ou esters mono-alkyliques ou poly-alkyliques de sorbitanne, en option éthoxylés, les éthers ou esters mono-alkyliques ou poly-alkyliques de pentaérythritol, les éthers ou esters mono-alkyliques ou poly-alkyliques de poly(oxy-ethylène), et les éthers ou esters mono-alkyliques ou poly-alkyliques de sucres, et de préférence, dans laquelle cet agent tensio-actif lipophile non-ionique est choisi dans l'ensemble constitué par les suivants : distéarate de saccharose, distéarate de di-glycérol, tristéarate de tétra-glycérol, décastéarate de déca-glycérol, monostéarate de di-glycérol, tristéarate d'hexa-glycérol, pentastéarate de déca-glycérol, monostéarate de sorbitanne, tristéarate de sorbitanne, monostéarate de diéthylèneglycol, ester de glycérol et des acides palmitique et stéarique, monostéarate de poly(oxy-éthylène) 2-OE (comportant deux motifs d'oxyde d'éthylène), monobéhénate et dibéhénate de glycérol, et tétra-stéarate de pentaérythritol.

4. Composition conforme à la revendication 1 ou 2, dans laquelle l'agent tensioactif hydrophile non-ionique présente un rapport hydro-lipophile valant entre 8 et 12, et de préférence, dans laquelle cet agent tensioactif hydrophile non-ionique est choisi dans l'ensemble formé par les éthers ou esters mono-alkyliques ou poly-alkyliques de sorbitanne polyéthoxylé, les éthers ou esters mono-alkyliques ou poly-alkyliques de poly(oxy-éthylène), les éthers ou esters mono-alkyliques ou poly-alkyliques de poly-glycérol, les copolymères à blocs de poly-(oxy-éthylène) et de poly(oxy-propylène) ou de poly(oxy-butylène), et les éthers ou esters mono-alkyliques ou poly-alkyliques de sucres, en option éthoxylés, et de préférence, dans laquelle cet agent tensio-actif hydrophile non-ionique est choisi dans l'ensemble constitué par les suivants : monostéarate de sorbitanne polyéthoxylé 4-OE, tristéarate de sorbitanne polyéthoxylé 20-OE, tristéarate de sorbitanne polyéthoxylé 20-OE, monostéarate de poly(oxy-éthylène) 8-OE, monostéarate d'hexa-glycérol, monostéarate de poly(oxy-éthylène) 10-OE, distéarate de poly(oxy-éthylène) 12-OE, et distéarate de méthylglucose polyéthoxylé 20-OE,.

5. Composition conforme à la revendication 1 ou 2, dans laquelle l'agent tensioactif ionique est choisi dans l'ensemble formé par les suivants :
a) les agents tensioactifs anioniques neutralisés,
b) les agents tensioactifs amphotères,
c) les dérivés alcane-sulfoniques,
d) et les agents tensioactifs cationiques.

6. Composition conforme à la revendication 5, dans laquelle l'agent tensioactif ionique est choisi dans l'ensemble formé par les suivants :
- les sels de métal alcalin du phosphate de dicétyle et du phosphate de dimyristyle, en particulier leurs sels de sodium ou de potassium,
- les sels de métal alcalin du sulfate de cholestérol et du phosphate de cholestérol, en particulier leurs sels de sodium,
- les acides lipo-aminés et leurs sels, comme les acyl-glutamates monosodiques ou disodiques, tels le sel disodique d'acide N-stéaroyl-L-glutamique ou les sels de sodium d'acide phosphatidique,
- les phospholipides,
- les sels monosodiques ou disodiques des acides acyl-glutamiques, en particulier de l'acide N-stéaroyl-glutamique,
- et les éthers alkyliques de citrate.

7. Composition conforme à la revendication 5, dans laquelle l'agent tensioactif ionique est
a) un phospholipide,
b) un dérivé alcane-sulfonique,
c) ou un composé choisi dans l'ensemble formé par les sels d'ammonium quaternaire, les amines grasses et leurs sels.

8. Composition conforme à la revendication 1 ou 2, dans laquelle le composé actif en agriculture est choisi dans l'ensemble constitué par les fongicides, insecticides, nématocides, acaricides, biocides, termiticides, rodenticides, arthropodicides et herbicides

9. Composition conforme à la revendication 2, dans laquelle le composé actif en agriculture est choisi dans l'ensemble essentiellement formé par les suivants : fluoroxypyr meptyl, chlorpyrifos, cholrpyrifosméthyl, trifluraline, cyhalofop-butyl, oxyfluorfène, éthalfluraline, ben-fluraline, myclobutanil, acéquinocyle, alpha-cyperméthrine, amitraze, bensultap, bêta-cyfluthrine, bêta-cyperméthrine, bifénox, bifenthrine, bioresméthrine, bromoxynil octanoate, butraline, cyflufénamide, cyfluthrine, cyperméthrine, diclofop-méthyl, dicofol, esfenvalérate, éthalfluraline, étofenprox, fénazaquine, fénoxaprop-P-éthyl, fenpropathrine, fenvalérate, flumiclorac-pentyl, fluoroglycofène-éthyl, flurazole, haloxyfop-étotyl, indoxacarbe, lambda-cyhalothrine, métamifop, méthoxychlore, oxyfluorfène, pendiméthaline, perméthrine, propaquizafop, pyributicarbe, quizalofop-P-éthyl, trifloxystrobine, bromophos, fénoxaprop-éthyl, fluazolate, nitrofène, profluraline et propiconazole.

10. Composition conforme à la revendication 1 ou 2, dans laquelle l'huile végétale est choisie dans l'ensemble essentiellement formé par les suivantes : huile de soja, huile de colza, huile de soja, huile de coprah, huile de coton, huile de palme, huile d'arachide, huile de lin, huile de canola, huile d'olive, huile de tournesol et huile de maïs.

11. Composition conforme à la revendication 2, dans laquelle le modificateur polymère est choisi dans l'ensemble formé par les corps suivants : éthyl-cellulose, polyacrylates, latex, polycarbonates, homopolymères et copolymères d'acétate de vinyle, polyoléfines, polyuréthanes, polyisobutylène, polybutène, polymères polyvinyliques, polyesters, polyéthers et polyacrylonitrile.

12. Composition conforme à la revendication 2, laquelle composition d'émulsion huile-dans-eau comprend de 1 à 60 % en poids, au total, de phase huileuse, de 0,2 à 40 % en poids de modificateur polymère, de 10 à 35 % en poids de composé(s) actif(s) en agriculture, de 0,1 à 20 % en poids d'huile végétale, de 0,4 à 13 % en poids d'agent tensioactif lipophile non-ionique, de 0,3 à 10 % en poids d'agent tensio-actif hydrophile non-ionique, et de 0,1 à 9 % en poids d'agent tensio-actif ionique, par rapport au poids total de la composition d'émulsion huile-dans-eau.

13. Composition conforme à la revendication 1 ou 2, laquelle composition d'émulsion huile-dans-eau comprend de 1 à 60 % en poids, au total, de phase huileuse, de 0,1 à 20 % en poids d'huile végétale, de 10 à 35 % en poids de composé(s) actif(s) en agriculture, de 0,4 à 13 % en poids d'agent tensioactif lipophile non-ionique, de 0,3 à 10 % en poids d'agent tensioactif hydrophile non-ionique, et de 0,1 à 9 % en poids d'agent tensioactif ionique, par rapport au poids total de la composition d'émulsion huile-dans-eau.

14. Procédé de prévention ou de lutte contre des végétaux, champignons, insectes, nématodes, acariens, arthropodes, rongeurs et termites indésirables, ou des bactéries ou d'autres microorganismes, comportant le fait d'appliquer, en un endroit où l'on veut prévenir leur infestation ou lutter contre celle-ci, une composition conforme à la revendication 8, étant entendu que ledit endroit n'est pas un humain ou un animal.
